# FASCICULE DE BREVET EUROPEEN

(11) **EP 3 483 997 B1**
(45) Date de publication et mention de la délivrance du brevet: **12.07.2023**
(21) Numéro de dépôt: 18205491.6
(22) Date de dépôt: 09.11.2018
(51) Int. Cl.: H02G 3/12, H02G 3/18, H01R 13/508, H01R 13/703

(54) **APPAREILLAGE ÉLECTRIQUE**
ELEKTRISCHES GERÄT
ELECTRICAL APPARATUS

(30) Priorité: 10.11.2017 FR 1760579
(43) Date de publication de la demande: 15.05.2019
(73) Titulaire: Legrand France, 87000 Limoges (FR); Legrand SNC, 87000 Limoges (FR)
(72) Inventeur: BARRUCHE, Alain, 87230 Bussière Galant (FR)
(74) Mandataire: Jacobacci Coralis Harle

(56) Documents cités:
- EP-A1- 2 819 257
- CN-A- 101 677 164
- ES-A1- 2 631 183
- FR-A1- 2 907 977
- FR-A1- 3 013 159

## Description

La présente invention concerne de manière générale le domaine des appareillages électriques et notamment celui des prises de courant et des dispositifs de sortie de câbles modulaires.

Elle concerne plus particulièrement un appareillage électrique comprenant un moteur pourvu d'un socle logeant des éléments électriques et/ou électroniques et adapté à être monté dans une boîte d'encastrement standard pour produits modulaires, ce socle comportant une enveloppe en matière isolante présentant une face externe qui délimite un volume d'encombrement hors tout, et un support d'appareillage auquel est fixé ledit socle, ce support d'appareillage comportant un cadre globalement plat présentant une épaisseur définie entre un plan arrière d'appui contre une paroi de montage et une face avant destinée à être recouverte d'au moins un élément de finition.

### ARRIERE-PLAN TECHNOLOGIQUE

Usuellement, le support d'appareillage sert au montage du socle du moteur de l'appareillage électrique dans une boîte d'encastrement.

Le socle du moteur de l'appareillage électrique est solidarisé au support d'appareillage de telle manière que cette solidarisation, dite « solidarisation fonctionnelle », résiste aux chocs frontaux que peut recevoir l'appareillage électrique en cours d'utilisation. En cas de choc frontal sur l'appareillage électrique, le socle du moteur de l'appareillage ne doit pas se désolidariser du support d'appareillage et s'enfoncer dans la boîte d'encastrement.

Les boîtes d'encastrement pour les produits électriques modulaires présentent des dimensions internes standardisées dont la profondeur est déterminée en fonction de l'épaisseur usuelle d'une cloison d'encastrement. Actuellement, le volume interne d'une telle boîte reçoit non seulement le socle du moteur de l'appareillage électrique concerné mais également les moyens de la solidarisation fonctionnelle du socle au support d'appareillage.

Ainsi, tous les appareillages électriques modulaires, quelle que soit leur fonction (prise de courant, commutateur, variateur, sortie de câble etc.), comportent un socle de moteur dont le volume d'encombrement hors tout standardisé est limité à un volume maximum autorisant le montage et le câblage du socle solidarisé au support d'appareillage dans une telle boîte d'encastrement au volume interne standardisé.

La notion de modularité des appareillages électriques est avantageuse pour l'installateur car elle lui donne de la souplesse dans la conception d'une installation électrique en lui laissant le choix de la fonction d'appareillage électrique à monter dans la boîte d'encastrement disponible.

Cette notion de modularité est également avantageuse pour le fabricant car il peut produire en masse un moteur ou mécanisme d'appareillage complet et autonome dont le volume d'encombrement hors tout est standardisé, ce moteur pouvant ultérieurement être utilisé et recombiné avec d'autres éléments de produits modulaires pour constituer une famille. Cette production massive automatisée permet de réduire les coûts de façon importante.

Les appareillages électriques connectés dont la mise en service peut être commandée à l'aide d'un appareil portable, comprennent des éléments électroniques de commande supplémentaires qui entraînent une augmentation du volume externe du socle du moteur.

Actuellement, un tel appareillage électrique « connecté » solidarisé au support d'appareillage ne peut pas être monté dans une boîte d'encastrement pour produits modulaires car le volume total à monter dans la boîte d'encastrement, comprenant le volume externe du socle du moteur auquel s'ajoute le volume des moyens de la solidarisation fonctionnelle du socle au support d'appareillage, est supérieur au volume interne standardisé qu'offre une boîte d'encastrement pour produits modulaires.

Par ailleurs, on connaît du document EP 2 819 257, un appareillage électrique qui comprend, d'une part, deux mécanismes d'appareillage tels qu'un mécanisme de prise de courant et un mécanisme de prise USB, l'un des mécanisme étant placé dans une boîte d'encastrement standard tandis que l'autre mécanisme est placé à l'extérieur de cette boîte d'encastrement, et, d'autre part, un seul enjoliveur situé à l'avant des deux mécanismes, cet enjoliveur présentant une forme qui définit pour un utilisateur la fonction électrique de chaque mécanisme d'appareillage.

Un tel appareillage électrique présente un volume bien supérieur au volume standard d'un appareillage modulaire.

### OBJET DE L'INVENTION

Le but de la présente invention est donc de proposer un appareillage électrique pouvant être monté dans une boîte d'encastrement standardisée pour produits électriques modulaires, dans lequel la solidarisation fonctionnelle du socle du moteur au support d'appareillage est assurée tout en étant agencée de manière optimisée pour que le volume interne utile dudit socle puisse être augmenté de sorte que ce socle occupe pratiquement tout le volume interne standardisé d'une telle boîte d'encastrement.

Plus particulièrement, on propose selon l'invention un appareillage électrique tel que défini dans la revendication 1.

Ainsi, avantageusement, dans l'appareillage électrique selon l'invention, d'une part, le support d'appareillage présente un agencement exempt de saillie en dehors du volume externe du socle du moteur de sorte que ce support ne présente aucune partie pouvant prendre de la place utile dans le volume interne standardisé d'une boîte d'encastrement, et, d'autre part, la solidarisation fonctionnelle du socle du moteur au support d'appareillage est réalisée dans une partie du support d'appareillage destinée à s'étendre, en pratique, au-dessus et en dehors dudit volume interne utile d'une telle boîte d'encastrement.

En conséquence, dans l'appareillage électrique selon l'invention, le volume d'encombrement hors tout, et donc le volume interne utile, du socle du moteur est augmenté pour loger des éléments électriques et/ou électroniques supplémentaires comme ceux nécessaires à la connexion dudit appareillage à un appareil de commande portable ou comme ceux nécessaires à l'alimentation d'une prise USB, et le socle solidarisé au support d'appareillage, lorsqu'il est monté dans une boîte d'encastrement standard pour produits modulaires, occupe pratiquement tout le volume interne d'une telle boîte.

D'autres caractéristiques non limitatives et avantageuses de l'appareillage électrique conforme à l'invention, prises individuellement ou selon toutes les combinaisons techniquement possibles, sont énoncées dans les revendications 2 à 15.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique éclatée en perspective avant d'un premier mode de réalisation de l'appareillage électrique selon l'invention,
- la figure 2 est une vue schématique éclatée en perspective arrière de l'appareillage de la figure 1,
- la figure 3 est une vue de face de l'appareillage de la figure 1 assemblé,
- la figure 4 est une vue en coupe selon le plan C-C de la figure 3,
- la figure 5 est une vue en loupe du détail C de la figure 4,
- la figure 6 est une vue en coupe selon le plan A-A de la figure 3,
- la figure 7 est une vue en loupe du détail D de la figure 6,
- la figure 8 est une vue schématique éclatée en perspective avant d'un deuxième mode de réalisation de l'appareillage électrique selon l'invention,
- la figure 9 est une vue schématique éclatée en perspective arrière de l'appareillage de la figure 8,
- la figure 10 est une vue de face de l'appareillage de la figure 8 assemblé,
- la figure 11 est une vue en coupe selon le plan A-A de la figure 10,
- la figure 12 est une vue en loupe du détail C de la figure 11,
- la figure 13 est une vue en coupe selon le plan B-B de la figure 10,
- la figure 14 est une vue en loupe du détail D de la figure 13,
- la figure 15 est une vue schématique éclatée en perspective avant d'un troisième mode de réalisation de l'appareillage électrique selon l'invention, et
- la figure 16 est une vue schématique éclatée en perspective arrière de l'appareillage de la figure 15.

Dans la description qui va suivre, par convention, le terme « avant » désignera le côté de l'appareillage électrique orienté vers un utilisateur lorsque cet appareillage est en position d'utilisation sur une paroi, tandis que le terme « arrière » désignera le côté opposé de cet appareillage, tourné vers l'intérieur de la paroi.

Les figures représentent trois modes de réalisation différents 10 ; 20 ; 30 de l'appareillage électrique conforme à l'invention.

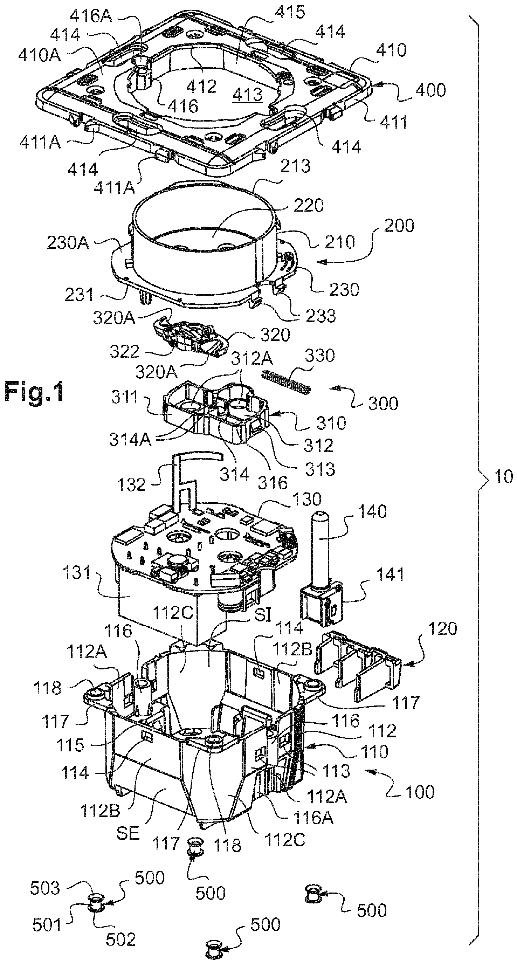

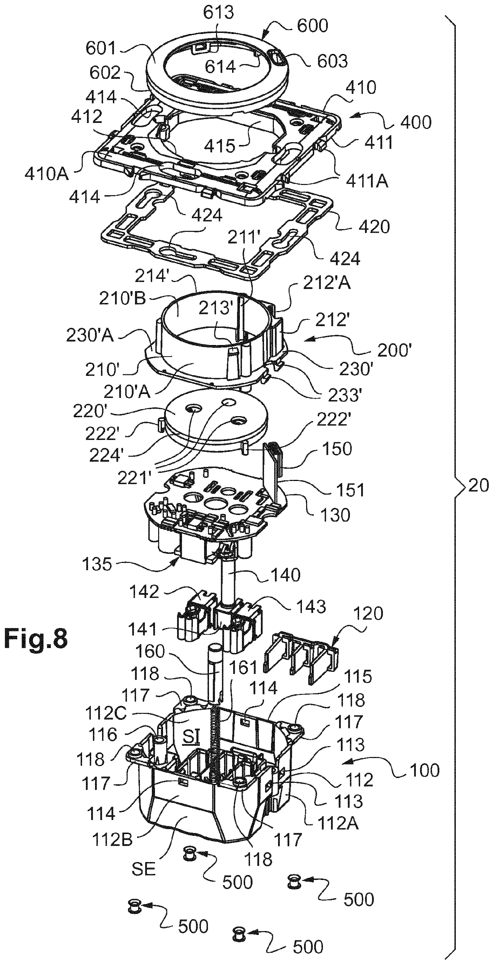

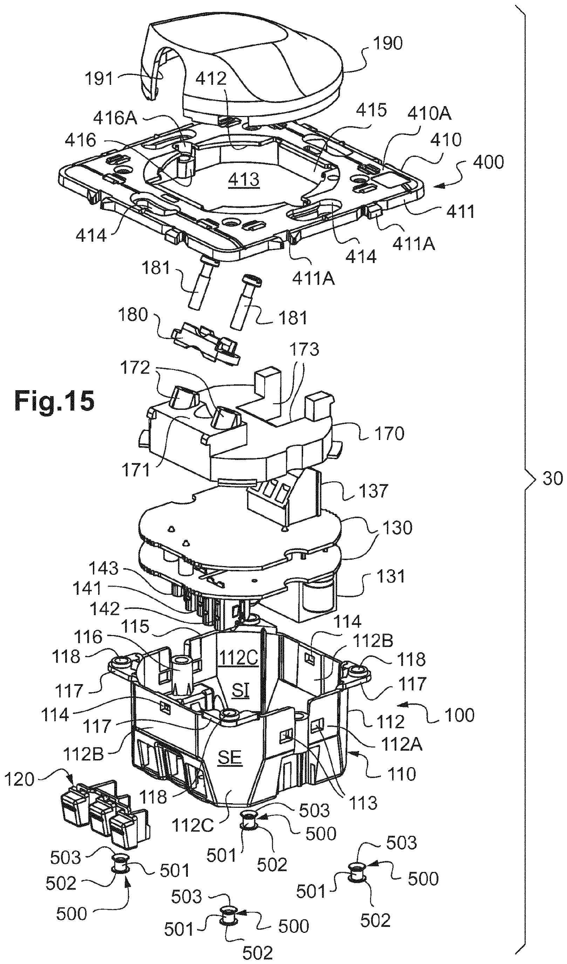

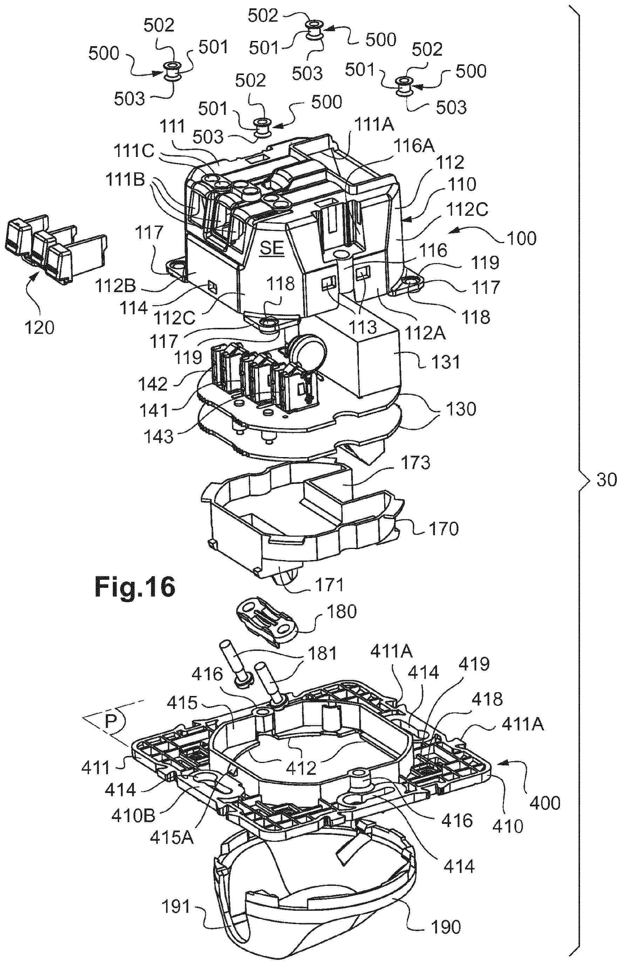

Il s'agit d'une prise de courant connectée représentée sur les figures 1 à 7, d'une prise de courant à fond de puits mobile intégrant une micro prise USB représentée sur les figures 8 à 14 et d'un dispositif de sortie de câbles connecté représenté sur les figures 15 et 16.

En préliminaire, on notera que, d'une figure à l'autre, les éléments identiques ou similaires de ces différents modes de réalisation de l'invention, seront référencés par les mêmes signes de référence et ne seront pas décrits à chaque fois.

Chaque appareillage électrique 10 ; 20 ; 30 représenté sur les figures 1, 2, 8, 9, 15 et 16, comprend un moteur pourvu d'un socle 100 logeant des éléments électriques et/ou électroniques, un support d'appareillage 400, et un enjoliveur 200 ; 200' ; 170,190 qui donne la fonction à l'appareillage.

Quel que soit le mode de réalisation représenté, le socle 100 comprend une enveloppe 110 en matière isolante. Cette enveloppe 110 est généralement réalisée d'une seule pièce en matière plastique moulée.

L'enveloppe 110 présente une forme globalement parallélépipédique ouverte à l'avant.

Elle comporte une paroi de fond 111 à partir duquel s'élève une paroi latérale 112.

La paroi latérale 112 est constituée de quatre panneaux 112A, 112B deux à deux parallèles, reliés par quatre pans coupés 112C placés aux quatre coins du parallélépipède. La paroi latérale 112 présente un bord avant 115 libre périphérique qui délimite l'ouverture avant de l'enveloppe 110.

La face externe SE de l'enveloppe 110 délimite un volume d'encombrement hors tout du socle 100, tandis que la face interne SI de cette enveloppe 110 délimite un logement de réception des divers éléments électriques et électroniques.

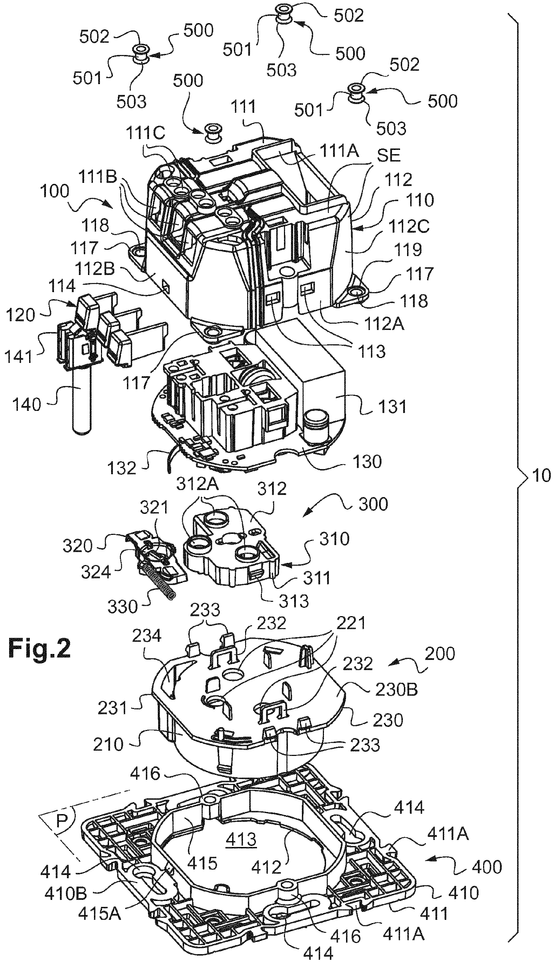

Selon les modes de réalisation représenté sur les figures 8 et 15, au fond du logement de réception, il est prévu des cloisons qui définissent trois espaces de montage de trois bornes électriques 141, 142, 143, une borne de terre 141 et deux bornes de phase et de neutre 142, 143. Selon le mode de réalisation représenté sur la figure 2, les bornes électriques sont clipsées dans des chambres isolées d'un boîtier intermédiaire placé au fond du logement de réception de ladite enveloppe 110. Ce boîtier intermédiaire est rapporté sur la face arrière d'une plaque support de circuit imprimé 130, lesdites bornes étant soudées au circuit imprimé.

Ici, les bornes électriques 141, 142, 143 sont des bornes automatiques à lame ressort de contact et il est prévu dans un des panneaux 112B de la paroi latérale 112 de l'enveloppe 110, à proximité de la paroi de fond 111, des ouvertures 111B dans lesquelles sont engagées des poussettes 120 aptes à agir sur les lames ressorts de contact desdites bornes pour la déconnexion des conducteurs électriques. En outre, il est prévu dans la paroi de fond 111, des ouvertures 111C d'accès aux espaces de montage desdites bornes électriques pour l'introduction de l'âme conductrice dénudée des conducteurs électriques dans lesdites bornes électriques. Classiquement, il est prévu deux ouvertures 111C par borne électrique de sorte que, dans chaque borne, il est possible de connecter un conducteur provenant du réseau électrique et un conducteur de repiquage.

L'enveloppe 110 du socle 100 comporte au milieu de deux panneaux 112A parallèles, une cheminée 116 qui débouche, à l'avant, dans une encoche du panneau 112A, et, à l'arrière, dans un logement 116A prévu en renfoncement de la face externe SE. Chaque cheminée 116 est destinée à accueillir une vis de griffe dont la griffe se loge dans ledit logement 116A. Les deux vis de griffe (non représentées) servent à l'accrochage du socle 100 dans une boîte d'encastrement (non représentée).

Quel que soit le mode de réalisation représenté sur les figures, le support d'appareillage 400 de l'appareillage électrique 10 ; 20 ; 30, auquel est fixé ledit socle 100, se présente sous la forme d'un cadre globalement plat, délimité entre une tranche périphérique externe 411 et une tranche périphérique interne 412 qui forme le bord d'une ouverture 413 (ici une ouverture centrale) à travers de laquelle on accède à la partie fonctionnelle de l'appareillage électrique donnée par l'enjoliveur 200 ; 200' ; 170,190.

Selon les modes de réalisation de l'invention représentés sur les figures 1 à 7, 15 et 16, le support d'appareillage 400 est constitué d'une seule pièce isolante, un cadre 410 réalisé en matière plastique moulée, alors que selon le mode de réalisation représenté sur les figures 8 à 14, il est constitué d'une pièce isolante, un cadre 410 réalisé en matière plastique moulée, à l'arrière de laquelle est encastrée une âme métallique 420 (se présentant également sous la forme d'un cadre) de telle sorte que les tranches périphériques externe 411 et interne 412 du support d'appareillage 400 appartiennent au cadre 410 isolant.

Ici, le cadre 410 du support d'appareillage 400, représenté sur les différentes figures, présente un contour carré aux coins arrondis et sa tranche périphérique externe 411 comporte quatre parties droites deux à deux parallèles. Chaque partie droite porte en saillie deux éléments d'assemblage 411A, un élément mâle en forme de queue d'aronde et un élément femelle de forme complémentaire à celle de l'élément mâle. Ces éléments d'assemblage 411A servent à associer le support d'appareillage 400 à un autre support du même type.

La tranche périphérique interne 412 du cadre 410 suit le contour d'une sorte de polygone (voir figures 1, 2, 3, 8, 9, 15, 16) avec quatre parties droites, parallèles aux parties droites de la tranche périphérique externe 411, reliées par quatre parties en arc de cercle.

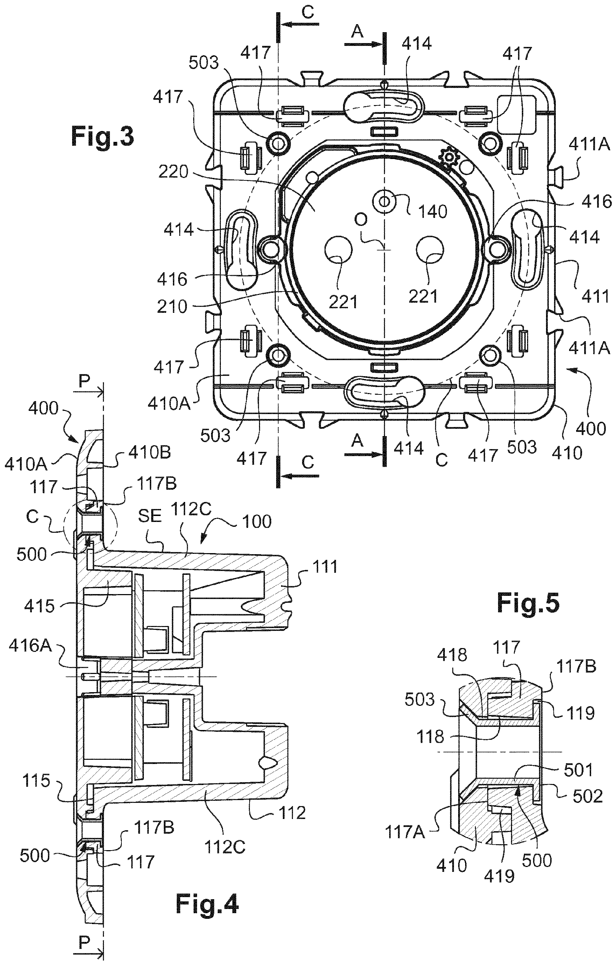

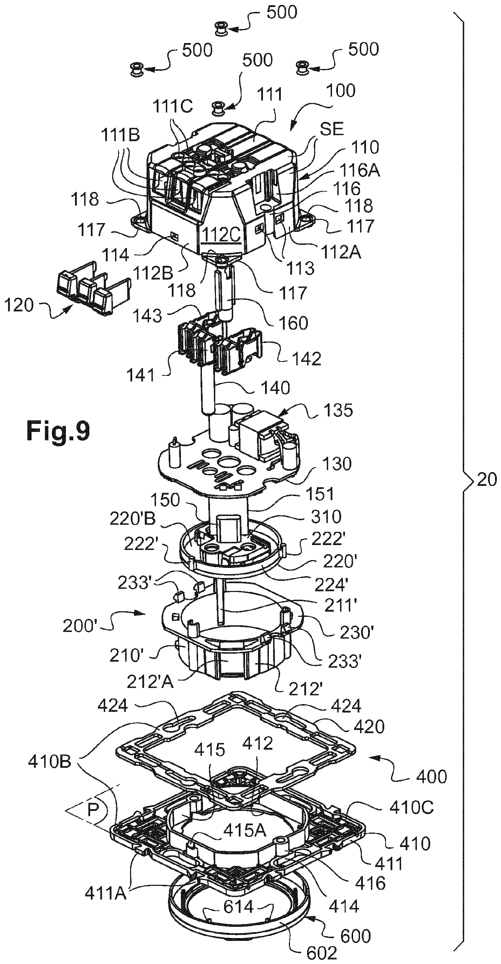

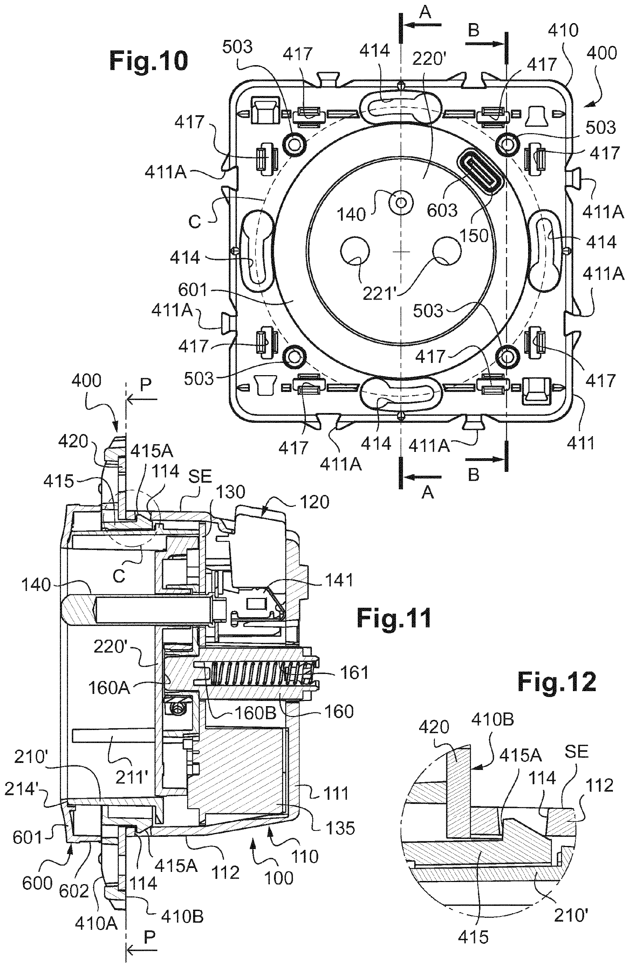

Le cadre 410 du support d'appareillage 400 comporte quatre ouvertures 414, en forme de trou serrure, réparties régulièrement sur un cercle C autour de son ouverture centrale 413, dans des régions situées entre les parties droites des tranches périphériques interne 411 et externe 412 (voir figures 3 et 10). Ces ouvertures 414 servent au passage de vis pour le vissage éventuel du support d'appareillage 400 dans des fûts taraudés de la boîte d'encastrement (non représentée). Dans le mode de réalisation représenté sur les figures 8 et 9, l'âme métallique 420 qui s'encastre à l'arrière du cadre 410, comporte elle aussi des ouvertures 424 en forme de trou de serrure qui sont placées en correspondance des ouvertures 414 du cadre 410.

Le cadre 410 comporte une épaisseur définie entre, d'une part, un plan arrière 410B d'appui du support d'appareillage 400 contre une paroi de montage (ici non représentée) et, d'autre part, une face avant 410A destinée à être recouverte d'au moins un élément de finition (non représenté).

Plus particulièrement, dans les modes de réalisation de l'invention représentés sur les figures 2, 4, 6, et 16, le cadre 410 en matière isolante du support d'appareillage 400 comporte une face arrière plane 410B qui s'étend dans un plan P et qui forme ledit plan arrière d'appui sur une paroi de montage. Dans le mode de réalisation de l'invention représenté sur les figures 9, 11 et 13, le cadre 410 en matière isolante comporte à l'arrière un renfoncement 410C (voir figure 9) qui loge l'âme métallique 420 si bien que l'ensemble constitué par le cadre 410 et l'âme métallique 420 encastrée à l'arrière du cadre 410, présente une face arrière plane 410B qui s'étend dans un plan P et qui forme ledit plan arrière d'appui sur la paroi de montage.

L'élément de finition est généralement une plaque de finition qui recouvre la face avant 410A du cadre 410 du support d'appareillage 400 et qui s'étend au-delà dudit cadre 410 sur la paroi de montage pour parfaire l'esthétique de l'ensemble. Elle est encliquetée dans des ouvertures 417 du cadre 410 prévues à cet effet (voir figures 3 et 10).

Comme le montrent les figures 8, 9, 10 et 11, un autre élément de finition 600 peut être associé à la plaque de finition. Dans l'exemple représenté sur les figures 8, 9 et 10, cet autre élément de finition est une bague 600, réalisée avantageusement d'une seule pièce, par moulage notamment d'une matière plastique. Cette bague 600 comporte une paroi de finition 601 annulaire, bordée extérieurement par une jupe cylindrique 602. Le long du bord de la paroi de finition 601 qui délimite l'ouverture centrale de la bague 600, il est prévu deux brides 613 pour l'accrochage de la bague 600 à deux dents 213' prévues sur la face externe 210'A de la paroi cylindrique 210' d'un enjoliveur de prise de courant 200'. La face arrière de la paroi de finition 601 de la bague 600 porte, en outre, des nervures 614 qui servent au positionnement angulaire de la bague 600 sur le support d'appareillage 400 (voir figures 8 et 9). Comme le montre plus particulièrement la figure 11, lorsque la bague 600 est accrochée sur la paroi cylindrique 210' de l'enjoliveur 200' qui émerge vers l'avant de l'appareillage électrique 20, au travers de l'ouverture centrale 413 du support d'appareillage 400, la paroi de finition 601 annulaire repose sur le bord périphérique avant 214' de ladite paroi cylindrique 210' et le bord libre arrière de la jupe cylindrique 602 repose sur la face avant 410A du cadre 410 du support d'appareillage 400. Une plaque de finition (non représentée) peut alors être montée sur ledit support d'appareillage 400 autour de ladite bague 600.

De manière remarquable, dans l'appareillage électrique 10 ; 20 ; 30, d'une part, le support d'appareillage 400 est exempt de toute paroi ou trottoir s'étendant, en saillie dudit plan arrière 410B d'appui, à l'extérieur du volume d'encombrement hors tout du socle 100, et, d'autre part, la solidarisation fonctionnelle du socle 400 audit support d'appareillage 400 est réalisée au moyen d'éléments de fixation 500 qui s'étendent au travers de ladite épaisseur du cadre 410.

On entend ici par l'expression « solidarisation fonctionnelle », une solidarisation qui résiste aux chocs frontaux que peut recevoir l'appareillage électrique 10 ; 20 ; 30 lorsqu'il est en place sur une paroi de montage, monté dans une boîte d'encastrement, de telle manière que le socle 100 reste solidarisé au support d'appareillage 400 et ne s'enfonce pas à l'intérieur de ladite boîte d'encastrement.

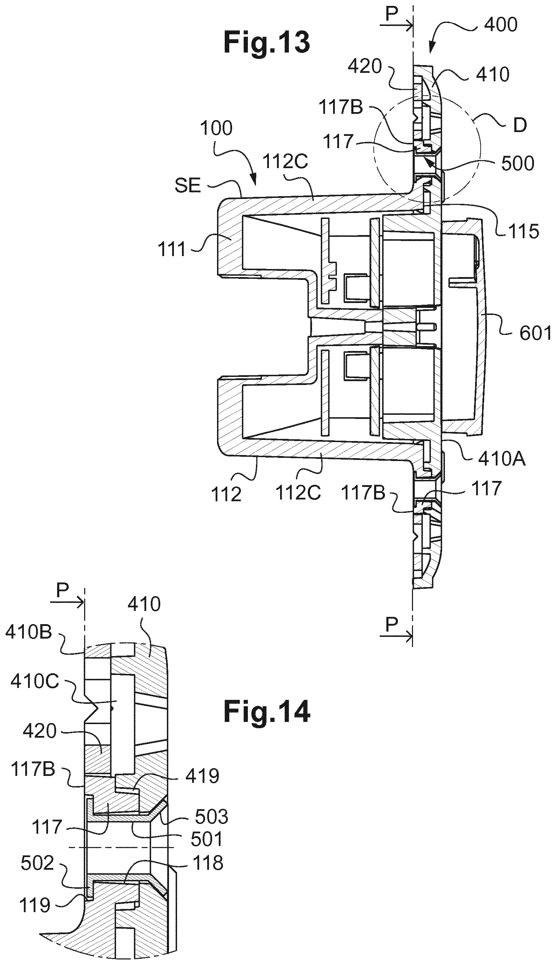

Plus particulièrement, comme le montrent les figures 4 et 13, lesdits éléments de fixation 500 sont contenus dans un volume limité à l'arrière du support d'appareillage 400 par ledit plan arrière 410B si bien qu'aucune saillie n'est formée à l'arrière dudit support d'appareillage 400 au-delà dudit plan arrière 410B. Ici, avantageusement, lesdits éléments de fixation 500 sont entièrement logés dans ladite épaisseur cadre 410. Les éléments de fixation 500 sont rapportés sur ledit support d'appareillage 400 et sur ledit socle 100.

De façon préférentielle, les éléments de fixation 500 sont des rivets traversant ledit support d'appareillage 400 et une partie 117 dudit socle 100 (voir figures 4, 5, 13, 14). Il est prévu quatre rivets 500 disposés sur le cercle C intercalés entre les ouvertures 414 en forme de trou de serrure (voir la figure 3).

Ces rivets 500 sont avantageusement réalisés en laiton. Classiquement, ils comportent un corps cylindrique 501 portant, à une extrémité, une tête 502 en forme de collerette plate et dont l'autre extrémité 503 est épanouie en forme d'entonnoir après que les rivets 500 ont été mis en place sur le socle 100 et le support d'appareillage 400.

Comme le montrent les figures 1, 4, 5, 8, 13 et 14, l'enveloppe 110 isolante du socle 100 comporte un bord avant 115 qui délimite l'ouverture avant dudit socle, et des languettes 117 qui s'étendent à partir dudit bord avant 115 vers l'extérieur dudit socle 100. Il est prévu ici quatre languettes117 placées aux quatre coins de l'enveloppe 110 du socle 100. Ces languettes 117 présentent une forme en triangle. Elles sont chacune percée d'un orifice 118 cylindrique qui débouche sur la face arrière 117B de la languette 117 par un élargissement formant une gorge 119 (voir figures 5 et 14).

Le support d'appareillage 400 comporte, à l'arrière, des logements 419 en renfoncement dudit plan arrière 410B, agencés pour recevoir lesdites languettes 117 de telle manière que la face arrière 117B de chaque languette 117 s'étend à effleurement dudit plan arrière 410B dudit support d'appareillage 400 (voir figures 5 et 14).

Les logements 419 sont formés dans le cadre 410 en matière isolante.

Le cadre 410 comporte par ailleurs des orifices cylindriques 418 qui, d'un côté, débouchent sur la face avant 410A du cadre 110 par une embouchure évasée, et, d'un autre côté, débouchent dans lesdits logements 419.

Lorsque lesdites languettes 117 de l'enveloppe 110 du socle 100 sont placées dans lesdits logement 419 du support d'appareillage 400, avec leur face avant 117A contre le fond des logements 419, les orifices 118 prévus dans les languettes 117 s'alignent avec ceux du cadre 110 (voir figures 5 et 14).

Lesdits éléments de fixation 500 coopèrent avec lesdites languettes 117 de l'enveloppe 110 du socle 100 pour assurer la solidarisation fonctionnelle du socle 100 au support d'appareillage 400.

Ici, comment le montrent les figures 4, 5, 13 et 14, le corps 501 de chaque rivet 500 traverse l'orifice cylindrique 418 correspondant du cadre 410 dudit support d'appareillage 400 et l'orifice 118 d'une languette 117 de l'enveloppe 110 dudit socle 100 placée dans le logement 119 du cadre de sorte que la tête 502 dudit rivet 500, située du côté de la face arrière 117B de la languette 117, s'étend dans la gorge 119 (formée dans cette languette 117) en retrait de cette face arrière 117B. Lorsque chaque rivet 500 est ainsi positionné, l'extrémité du rivet 500 opposée à la tête 502 est épanouie mécaniquement en forme d'entonnoir 503 afin de serrer l'une contre l'autre la languette 117 du socle et la partie correspondante du cadre 410.

Dans le mode de réalisation représenté sur les figures 8 à 14, comme le montre plus particulièrement la figure 13, l'âme métallique 420, encastrée à l'arrière du cadre 410 isolant du support d'appareillage 400, est bloquée entre, d'une part, un bord de chaque languette 117 de l'enveloppe 110 du socle serrée contre le cadre 410 par chaque rivet 500, et, d'autre part, le bord avant 115 libre de l'enveloppe 110 du socle 100, une face de l'âme métallique 420 s'étendant à effleurement desdites faces arrières 117B desdites languettes 117 en formant une partie dudit plan arrière 410B dudit support d'appareillage 400.

Enfin, selon une caractéristique préférentielle des appareillages électriques 10 ; 20 ; 30, le support d'appareillage 400 et le socle 100 comprennent des éléments de positionnement complémentaires, distincts desdits éléments de fixation 500, qui coopèrent ensemble en des lieux situés à l'intérieur dudit volume d'encombrement hors tout dudit socle 100.

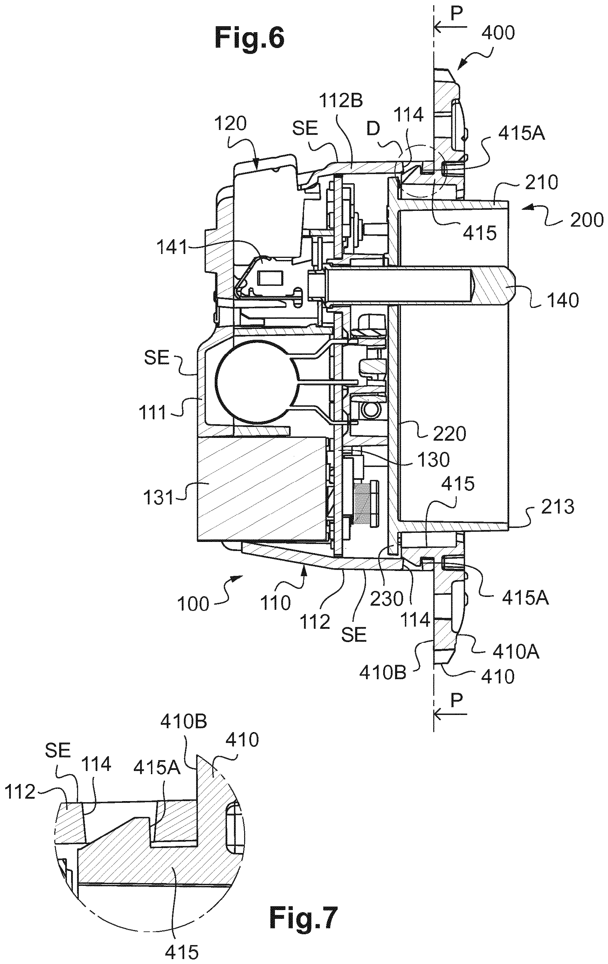

Comme le montrent les figures 6, 7, 11 et 12, les éléments de positionnement comprennent, d'une part, sur ledit support d'appareillage 400, une paroi 415 prévue à l'arrière du cadre 410, qui s'étend perpendiculairement audit plan arrière 410B à l'intérieur dudit socle 100, et qui porte au moins une dent d'accrochage 415A, et, d'autre part, sur ledit socle 100, au moins une fenêtre 114 formée dans ladite enveloppe 110, présentant un bord sur lequel s'accroche ladite dent d'accrochage 415A.

Ici, la paroi 415 est une paroi périphérique prévue à l'arrière du cadre 410 et qui longe le bord de l'ouverture centrale 413 du support d'appareillage 400. Elle comporte deux parties droites diamétralement opposées dont les faces tournées à l'opposée de l'ouverture centrale 413 du support d'appareillage, portent chacune une telle dent d'accrochage 415A. En correspondance, deux panneaux 112B parallèles de la paroi latérale 112 de l'enveloppe 110 du socle 100 comportent deux fenêtres 114 pour l'accrochage desdites dents d'accrochage 415A.

Il convient cependant de noter que l'accrochage des dents d'accrochage 415A du support d'appareillage 400 sur les bords des fenêtres 114 du socle 100 ne constitue pas une solidarisation fonctionnelle du socle 100 au support d'appareillage 400 car cet accrochage ne résisterait pas en cas de choc frontal sur ledit appareillage électrique.

La paroi 415 comporte au milieu de deux autres parties droites diamétralement opposées, deux cheminées 416 qui débouchent chacune dans une encoche semi-cylindrique 416A, pour le passage des vis de griffe en vue de la fixation du support d'appareillage 400 et du socle 100 fixé audit support à la paroi d'une boîte d'encastrement.

Avantageusement, grâce à l'agencement du socle 100 et du support d'appareillage 400, l'appareillage électrique 10, 20, 30 représenté sur les différentes figures appartient à la famille des appareillages modulaires dont le socle 100 présente un volume d'encombrement hors tout tel qu'il est capable d'être monté dans une boîte d'encastrement pour produits modulaires, au volume interne standardisé, tout en présentant une capacité d'accueil d'éléments électriques et électroniques supérieure à la capacité des socles standards.

Plus particulièrement, l'appareillage électrique 10 représenté sur les figures 1 à 7 est une prise de courant connectée du type franco-belge.

Elle comporte un enjoliveur 200 de prise de courant formé d'une plaque de base 230 dont la face avant 230A porte une paroi cylindrique 210 avec un bord libre 213. La paroi cylindrique 210 délimite latéralement un puits d'insertion d'une fiche électrique (non représentée). Le fond 220 du puits d'insertion est formé par une partie de la plaque de base 230. Il est percé de trois orifices 221, l'un pour le passage d'une broche de terre 140 reliée électriquement à une borne de terre 141, et les deux autres donnant accès aux bornes électriques de phase et de neutre placées à l'intérieur du socle 100. Comme le montre la figure 2, la paroi cylindrique 210 comporte sur sa face externe un renflement 234. Ce renflement 234 s'étend sur toute la hauteur de la paroi cylindrique 210. Il est creusé d'un conduit fermé à l'extrémité située du côté dudit bord libre 213, à l'avant de l'appareillage, et qui débouche sur la face arrière 230B de la plaque de base 230.

La plaque de base 230 porte sur sa tranche 231 des dents 233 pour l'accrochage de l'enjoliveur 200 au socle 100. Les dents 233 s'accrochent sur le bord de fenêtres 113 prévues dans les panneaux 112A parallèles de la paroi latérale 112 de l'enveloppe 110 du socle 100.

Lorsque l'enjoliveur 200 est accroché au socle 100 et que le socle 100 est solidarisé au support d'appareillage 400, la paroi cylindrique 210 de l'enjoliveur 200, dont le diamètre externe est égal au jeu près au diamètre interne de l'ouverture centrale 413 du support d'appareillage 400, émerge au travers de ladite ouverture centrale 413 du support d'appareillage 400 pour s'élever au-dessus de la face avant 410A du cadre 410 (voir figure 6).

La plaque de base 230 porte sur sa face arrière 230B, des brides 232 pour l'accrochage d'une cassette 310 d'un dispositif de sécurité 300 qui ferme les orifices 221 du fond 220 du puits d'insertion de l'enjoliveur 200 pour interdire l'accès aux bornes électriques de phase et de neutre de la prise de courant à tout autre élément que les broches d'une fiche électrique engagée dans le puits d'insertion de la prise de courant.

La cassette 310 du dispositif de sécurité comporte sur la face externe de sa paroi latérale 311, des dents 313 prévues pour l'accrochage auxdites brides 232 de la plaque de base 230.

Ce dispositif de sécurité 300 comporte un élément de fermeture 320 monté à pivotement à l'intérieur de la cassette 310. L'élément de fermeture 320 comporte deux volets 320A à surfaces inclinées, qui s'étendent de part et d'autre d'une partie centrale 321, 324 montée à pivotement sur un axe 314, 314A prévu au centre de la cassette 310.

La paroi de fond 312 de la cassette 310 est percée de trois orifices 312A dont deux orifices d'accès aux bornes électriques de phase et de neutre de la prise de courant et un orifice de passage de la broche de terre 140 qui émerge dans le puits d'insertion de l'enjoliveur 200.

En position active, les volets 320A de l'élément de fermeture 320 sont interposés entre les orifices 312A de la cassette 310 et les orifices 221 du fond 220 du puits d'insertion de l'enjoliveur 200 pour interdire l'accès aux bornes électriques de phase et de neutre de la prise de courant.

Lorsqu'une fiche électrique est insérée dans le puits d'insertion de l'enjoliveur 200 de la prise de courant, les broches de cette fiche appuient sur les surfaces inclinées des volets 320A et provoquent le pivotement de l'élément de fermeture 320 pour s'enfoncer au travers des orifices 312A à l'intérieur du socle 100 afin d'accéder aux bornes électriques de phase et de neutre de la prise de courant.

Lorsque la fiche électrique est retirée du puits d'insertion de la prise de courant, les volets 320A de l'élément de fermeture 320 sont ramenés en position active par l'intermédiaire d'un ressort de compression 330 monté entre un ergot 322 prévu sur un côté de l'élément de fermeture 320 et une paroi d'un logement 316 de la cassette 310. Enfin, il est prévu à l'intérieur de la cassette 310 une cloison qui limite le débattement en rotation de l'élément de fermeture 320.

Comme le montre plus particulièrement la figure 6, en dessous de la plaque de base 230 de l'enjoliveur 200, le socle 100 loge les bornes électriques de terre, de phase et de neutre ainsi qu'une partie de la borne de terre. Il loge les poussettes de déconnexion 120. Il loge également une plaque support de circuit imprimé 130 dont les pistes sont connectés à des éléments électroniques nécessaires pour connecter la prise de courant 10 à un dispositif de commande portable (non représenté). Parmi ces éléments électroniques, il est prévu un relais 131 qui présente un fort encombrement. Ce relais 131 de forme parallélépipédique rectangle s'étend jusqu'au fond du socle 100 où il occupe un espace libre supplémentaire donné par une ouverture rectangulaire 111A prévue dans la paroi de fond 111 de l'enveloppe 110 du socle 100. Il est également prévu une antenne 132 qui s'élève à partir de la face avant de la plaque support de circuit imprimé 130 (voir figure 1). Cette antenne 132 s'engage dans le conduit du renflement 234 de la paroi cylindrique 210 de l'enjoliveur 220 où elle est protégée. De cette manière, l'antenne peut 132 peut arriver jusqu'à la façade de la prise de courant 10.

L'appareillage électrique 20 représenté sur les figures 8 à 14 est une prise de courant dont l'enjoliveur 200' comporte une paroi de fond 220' du puits d'insertion mobile entre une position haute de repos où elle vient à effleurement du bord libre 214' de la paroi latérale 210' du puits et une position basse active où elle est enfoncée (voir figure 11).

Pour cela l'enjoliveur 200' comprend une paroi cylindrique 210' qui délimite latéralement le puits d'insertion d'une fiche électrique, à l'intérieur de laquelle est montée à glissement la paroi de fond 220' mobile du puits.

Cette paroi cylindrique 210' comporte à l'opposé de son bord libre 214' avant, une collerette 230' pour son montage dans le socle 100. Cette collerette 230' porte les dents 233' d'accrochage dans les fenêtres 113 de la paroi latérale 112 du socle 100.

La paroi de fond 220' est un disque percé d'orifices 221' d'accès aux bornes électriques. La tranche externe 224' de ce disque porte trois pions 222' engagés à coulissement dans trois rainures 211' prévues en renfoncement de la face interne 210'B de la paroi cylindrique 210'. Les rainures 211' présentent, à proximité dudit bord libre 214' avant de la paroi cylindrique 210', une extrémité fermée afin d'assurer une butée pour la paroi de fond 220'. La paroi de fond 220' porte sur sa face arrière 220'B la cassette 310 d'un dispositif de sécurité pratiquement identique à celui décrit en référence aux figures 1 et 2.

Comme le montre plus particulièrement la figure 11, il est prévu dans une région centrale du socle 100 un arbre 160, parallèle à la broche de terre 140, qui forme intérieurement un fourreau 160B logeant un ressort de compression 161. La tête 160A de l'arbre 160 passe au travers de la cassette 310 du dispositif de sécurité pour appuyer en permanence sur la paroi de fond 220' afin de la pousser vers sa position haute de repos sous l'action du ressort de compression 161.

En dessous de la paroi de fond 220', ici le socle 100 loge, outre les bornes électriques 141, 142, 143, la broche de terre 140, une paroi support de circuit imprimé 130 dont les pistes de circuit imprimé sont connectées à des éléments 135 d'alimentation en tension de 5 volts d'une micro prise USB, encore appelée prise USB de type C. Cette micro prise USB 150 est portée par une plaquette 151 qui s'élève à partir de la face avant de la plaque support de circuit imprimé 130, perpendiculairement à celle-ci. La micro prise USB est reliée électriquement via la plaquette 151 aux pistes du circuit imprimé.

La plaquette 151 et la micro prise USB 150 sont logés dans un logement 212'A prévu dans un renflement 212' situé sur la face externe de la paroi cylindrique 210' de l'enjoliveur 200' (voir figure 9).

Comme le montre plus particulièrement la figure 10, dans la prise de courant 20 assemblée, à l'avant de la prise de courant, l'embouchure de la micro prise USB 150 est accessible à un utilisateur via une ouverture 603 dédiée prévue dans la bague 600 de finition montée sur la paroi cylindrique 210' de l'enjoliveur 200'.

L'appareillage électrique 30 représenté sur les figures 15 et 16 constitue un dispositif de sortie de câbles connecté à un dispositif portable de commande à distance.

Il comporte à l'intérieur du socle 100, deux plaques support de circuit imprimé 130, une plaque inférieure et une plaque supérieure, montées en parallèle.

La plaque inférieure 130 porte les bornes électriques logées dans le fond du socle 100 ainsi que le relais 131 pour l'activation d'un bornier 137 par l'intermédiaire d'un dispositif de commande portable (non représenté). Le relais 131 est identique à celui de la prise de courant 10 connectée, représentée sur les figures 1 à 7. Il s'étend dans le socle 100 jusqu'au fond où il occupe l'espace supplémentaire donné par l'ouverture 111A prévue dans la paroi de fond 111 de l'enveloppe 110 dudit socle 100.

Le bornier 137 prévu pour le raccordement électrique des câbles d'un appareil externe (non représenté), est monté sur la plaque supérieure 130 de circuit imprimé.

Une antenne (non visible sur les figures) est disposée à plat entre les plaques inférieure et supérieure 130 de circuit imprimé pour la commande à distance du dispositif de sortie de câbles 30.

L'enjoliveur 170, 190 de ce dispositif de sortie de câbles 30, comporte un premier capot 170 en matière plastique moulée, montée sur la plaque support de circuit imprimé 130 supérieure. Ce capot 170 est coincé à l'intérieur du socle 100. Il comporte une encoche 173 pour laisser émerger le bornier 137 et il porte une plateforme 171 pourvue de fûts de vissage des vis 181 de serrage d'une bride 180 de maintien de câbles. L'enjoliveur comporte un deuxième capot 190, rapporté dans l'ouverture centrale 413 du support d'appareillage 400. Ce deuxième capot 190 est un couvercle de protection du bornier 137. Il recouvre l'ensemble du premier capot 170 en fermant l'ouverture centrale 413 du support d'appareillage 400 et il permet, via une ouverture latérale 191, la sortie à l'extérieur des câbles (non représentés) connectés au bornier 137 et maintenus sur la plateforme 171 par la bride 180 vissée à l'aide des vis 181.

## Revendications

1. Appareillage électrique (10 ; 20 ; 30) comprenant un **moteur pourvu d'un** socle (100) logeant des éléments électriques et/ou électroniques et adapté à être **monté dans une boîte d'encastrement standard pour produits modulaires,** ce socle comportant :
- une enveloppe (110) en matière isolante présentant une face externe (SE) qui **délimite un volume d'encombrement hors tout,** et
- **un support d'appareillage** (400) auquel est fixé ledit socle, ce support **d'appareillage** comprenant un cadre (410) globalement plat présentant une épaisseur définie entre un plan arrière (410B) **d'appui contre une paroi de montage** et une face avant (410A) **destinée à être recouverte d**'au moins un élément de finition, **ledit support d'appareillage (400) comportant des ouvertures** (414) en forme **de trous de serrure pour sa fixation à la boîte d'encastrement,**
**caractérisé en ce que** ledit support **d'appareillage** (400) est exempt de **toute paroi ou trottoir s'étendant,** en saillie dudit plan arrière (410B), **à l'extérieur** dudit **volume** d'encombrement hors tout, et
**en ce que** la solidarisation fonctionnelle du socle (100) audit support d'appareillage (400) est réalisée au moyen **d'éléments de fixation** (500) qui **s'étendent au travers de** ladite épaisseur du cadre (410), à distance des ouvertures (414) en forme de trous de serrure.

2. Appareillage électrique selon la revendication 1, dans lequel lesdits éléments de fixation (500) **sont contenus dans un volume limité à l'arrière du support d'appareillage** (400) par ledit plan arrière (410B) **si bien qu'aucune saillie n'est** formée **à l'arrière dudit support d'appareillage** au-delà dudit plan arrière (410B).

3. **Appareillage électrique selon** l'une des revendications 1 et 2, dans lequel lesdits éléments de fixation sont entièrement logés dans ladite épaisseur du cadre.

4. **Appareillage électrique selon l'une des revendications 1 à 3, dans lequel** lesdits éléments de fixation (500) **sont rapportés sur ledit support d'appareillage** (400) et sur ledit socle (100).

5. Appareillage électrique selon la revendication 4, dans lequel lesdits éléments de fixation sont des rivets (500) **traversant ledit support d'appareillage et** une partie dudit socle.

6. **Appareillage électrique selon** l'une des revendications 1 à 5, dans lequel **l'enveloppe isolante** (110) du socle (100) comporte un bord avant (115) qui délimite une ouverture avant dudit socle, et des languettes (117) **qui s'étendent à** partir dudit bord avant (115) **vers l'extérieur dudit socle, et en ce que ledit support d'appareillage** (400) comporte, **à l'arrière,** des logements (419) en renfoncement dudit plan arrière (410B), agencés pour recevoir lesdites languettes (117) de telle manière que la face arrière (117B) de chaque languette (117) **s'étend à effleurement** dudit plan arrière (410B) **dudit support d'appareillage.**

7. Appareillage électrique selon la revendication 6, dans lequel lesdits éléments de fixation (500) coopèrent avec lesdites languettes (117) **de l'enveloppe** (110) du socle (100) pour assurer la solidarisation fonctionnelle du socle (100) audit **support d'appareillage** (400).

8. Appareillage électrique selon la revendication 6, dans lequel ledit **support** d'appareillage (400) comprend une pièce isolante (410), moulée en matière plastique, dans laquelle sont formés lesdits logements (419).

9. Appareillage électrique selon les revendications 7 et 8, dans lequel ledit **support d'appareillage comporte une âme** métallique (420) **encastrée à l'arrière de** ladite pièce isolante (410) et bloquée entre, **d'une part, un bord** de chaque languette (117) **de l'enveloppe du socle coopérant avec** chaque élément de fixation (500), et, **d'autre part, un bord avant (115) de l'enveloppe** (110) du socle (100), une face de **l'âme métallique** (420) **s'étendant** à effleurement desdites faces arrières (117B) desdites languettes (117) en formant une partie dudit plan arrière (410B) dudit **support d'appareillage** (400).

10. Appareillage électrique selon les revendications 5 et 6, dans lequel chaque rivet (500) **traverse ledit support d'appareillage** (400) et une languette (117) **de l'enveloppe** (110) dudit socle, la tête (502) dudit rivet (500), située du côté de la face arrière de la languette (117) **correspondante, s'étendant en retrait de cette face** arrière.

11. **Appareillage électrique selon l'une quelconque des revendications précédentes, dans lequel le support d'appareillage et le socle comprennent des** éléments de positionnement complémentaires (415, 415A, 114), distincts desdits éléments de fixation (500), **qui coopèrent ensemble en des lieux situés à** l'intérieur **dudit volume d'encombrement hors tout dudit socle.**

12. Appareillage électrique selon la revendication 11, dans lequel lesdits éléments **de positionnement comprennent, d'une part, sur ledit support d'appareillage, une paroi** (415) **qui s'étend perpendiculairement audit** plan arrière à **l'intérieur dudit socle, et qui porte au moins une dent d'accrochage** (415A), et, **d'autre part,** sur ledit socle, au moins une fenêtre (114) formée dans ladite enveloppe (110), **présentant** un **bord sur lequel s'accroche ladite dent d'accrochage** (415A).

13. **Appareillage électrique selon l'une quelconque des revendications** précédentes, constituant un appareillage modulaire telle **qu'une prise de courant, dans lequel le socle enferme des éléments électroniques tels qu'un relais** (131) **connecté à une piste d'un circuit imprimé** (130), pour la connexion à distance dudit appareillage à un dispositif de commande portable

14. **Appareillage électrique selon l'une des revendications précédentes,** qui constitue un dispositif de sortie de câbles (30).

15. Appareillage électrique **selon l'une des** revendications 1 à 13, qui constitue une prise de courant et qui comporte une micro prise USB (150) débouchant en façade et **connectée à une piste d'un circuit imprimé** portant les **éléments électroniques assurant l'alimentation de ladite micro prise USB.**

## Patentansprüche

1. Elektrisches Gerät (10; 20; 30) mit einem Motor, der mit einem elektrische und/oder elektronische Elemente aufnehmenden Sockel (100) versehen ist und dazu ausgelegt ist, in eine Standardeinbaudose für modulare Produkte eingebaut zu werden, wobei der Sockel
- eine Hülle (110) aus isolierendem Material, die eine Außenseite (SE) aufweist, die ein Gesamteinbauvolumen abgrenzt, und
- einen Geräteträger (400), an dem der Sockel befestigt ist, wobei der Geräteträger einen insgesamt flachen Rahmen (410) aufweist, der eine definierte Dicke zwischen einer hinteren Ebene (410B) zum Anliegen an einer Montagewand und einer Vorderseite (410A), die dazu bestimmt ist, mit mindestens einem Zierelement bedeckt zu sein, aufweist, wobei der Geräteträger (400) Öffnungen (414) in Form von Schlüssellöchern für dessen Befestigung an der Einbaudose aufweist,
aufweist,
**dadurch gekennzeichnet, daß** der Geräteträger (400) frei von jeglicher Wandung oder Bahn ist, die sich von der hinteren Ebene (410B) ausgehend außerhalb des Gesamteinbauvolumens erstreckt und
daß die funktionelle Befestigung des Sockels (100) am Geräteträger (400) mit Hilfe von Befestigungsmitteln (500) erfolgt, die sich durch die Dicke des Rahmens (410) in einem Abstand von den Öffnungen (414) in Form von Schlüssellöchern erstrecken.

2. Elektrisches Gerät gemäß Anspruch 1, wobei die Befestigungsmittel (500) in einem Volumen enthalten sind, das an der Rückseite des Geräteträgers (400) durch die hintere Ebene (410B) begrenzt ist, so daß an der Rückseite des Geräteträgers keine Erhebung jenseits der hinteren Ebene (410B) ausgebildet ist.

3. Elektrisches Gerät gemäß einem der Ansprüche 1 und 2, wobei die Befestigungselemente vollständig in der Dicke des Rahmens untergebracht sind.

4. Elektrisches Gerät gemäß einem der Ansprüche 1 bis 3, wobei die Befestigungselemente (500) auf dem Geräteträger (400) und auf dem Sockel (100) aufgebracht sind.

5. Elektrisches Gerät gemäß Anspruch 4, wobei die Befestigungselemente Nieten (500) sind, die den Geräteträger und einen Teil des Sockels durchdringen.

6. Elektrisches Gerät gemäß einem der Ansprüche 1 bis 5, wobei die isolierende Hülle (110) des Sockels (100) einen vorderen Rand (115), der eine vordere Öffnung des Sockels abgrenzt, und Zungen (117), die sich von dem vorderen Rand (115) aus nach außerhalb des Sockels erstrecken, aufweist, und wobei der Geräteträger (400) an der Rückseite Räume (419) als Einbuchtungen in der hinteren Ebene (410B) aufweist, die dazu ausgelegt sind, die Zungen (117) so aufzunehmen, daß sich die Rückseite (117B) jeder Zunge (117) bündig mit der hinteren Ebene (410B) des Geräteträgers erstreckt.

7. Elektrisches Gerät gemäß Anspruch 6, wobei die Befestigungselemente (500) mit den Zungen (117) der Hülle (110) des Sockels (100) zusammenwirken, um die funktionelle Befestigung des Sockels (100) am Geräteträger (400) sicherzustellen.

8. Elektrisches Gerät gemäß Anspruch 6, wobei der Geräteträger (400) ein aus Plastikmaterial geformtes Isolierteil (410) aufweist, in der die Räume (419) ausgebildet sind.

9. Elektrisches Gerät gemäß den Ansprüchen 7 und 8, wobei der Geräteträger eine metallene Seele (420) aufweist, die an der Rückseite des isolierenden Teils (410) eingebettet ist und zwischen einem Rand jeder Zunge (117) der Hülle des Sockels, der mit jedem Befestigungselement (500) zusammenwirkt, einerseits, und einem vorderen Rand (115) der Hülle (110) des Sockels (100) andererseits blockiert ist, wobei sich eine Seite der metallenen Seele (420) bündig mit den Rückseiten (117B) der Zungen (117) erstreckt und dabei einen Teil der hinteren Ebene (410B) des Geräteträgers (400) bildet.

10. Elektrisches Gerät gemäß den Ansprüchen 5 und 6, wobei jede Niete (500) den Geräteträger (400) und eine Zunge (117) der Hülle (110) des Sockels durchquert, wobei sich der auf der Rückseite der entsprechenden Zunge (117) angeordnete Kopf (502) der Niete (500) gegenüber dieser Rückseite zurückgesetzt erstreckt.

11. Elektrisches Gerät gemäß einem der vorangehenden Ansprüche, wobei der Geräteträger und der Sockel komplementäre Positionierungselemente (415, 415A, 114), die andere als die Befestigungsmittel (500) sind, aufweisen, die an innerhalb des Gesamteinbauvolumens des Sockels gelegenen Stellen zusammenwirken.

12. Elektrisches Gerät gemäß Anspruch 11, wobei die Positionierungselemente einerseits an dem Geräteträger eine Wandung (415), die sich im Inneren des Sockels senkrecht zur hinteren Ebene des Sockels erstreckt und die mindestens einen Einhakzahn (415A) trägt, und andererseits auf dem Sockel mindestens ein in der Hülle (110) gebildetes Fenster (114), das einen Rand aufweist, an dem der Einhakzahn (415A) einhakt, aufweisen.

13. Elektrisches Gerät gemäß einem der vorangehenden Ansprüche, das ein modulares Gerät wie zum Beispiel eine Steckdose bildet, wobei der Sockel elektronische Elemente wie ein mit einer Leiterbahn einer gedruckten Schaltung (130) verbundenes Relais (131) für die Fernverbindung des Geräts mit einer tragbaren Steuervorrichtung umschließt.

14. Elektrisches Gerät gemäß einem der vorangehenden Ansprüche, das eine Ausgangsvorrichtung (30) für Kabel darstellt.

15. Elektrisches Gerät gemäß einem der Ansprüche 1 bis 13, das eine Steckdose darstellt und das eine USB-Mikrosteckdose (150) aufweist, die an der Vorderseite mündet und mit einer Leiterbahn einer gedruckten Schaltung verbunden ist, die die elektronischen Elemente aufweist, die die Versorgung der USB-Mikrosteckdose sicherstellen.

## Claims

1. An electrical accessory (10; 20; 30) comprising a motor provided with a base (100) which accommodates electrical and/or electronic elements and adapted to be mounted in a standard flush-mounted box for modular products, this base comprising:
- a casing (110) of insulating material having an outer face (SE) which delimits an overall bulk volume, and
- an accessory support (400) to which said base is fixed, this accessory support comprising a generally flat frame (410) having a thickness defined between a rear plane (410B) to bear against a mounting wall and a face front (410A) intended to be covered with at least one finishing element, said accessory support (400) including openings (414) in the shape of keyholes for fixing it to the flush-mounted box,
**characterised in that** said accessory support (400) is free of any wall or sidewalk extending, projecting from said rear plane (410B), outside said overall bulk volume, and
**in that** the functional securing of the base (100) to said accessory support (400) is achieved by means of fasteners (500) which extend through said frame (410) thickness, at a distance from the openings (414) in the shape of keyholes.

2. The electrical accessory according to claim 1, wherein said fasteners (500) are contained in a limited volume at the rear of the accessory support (400) by said rear plane (410B) so that no projection is formed at the rear of said accessory support beyond said rear plane (410B).

3. The electrical accessory according to claim 1 or claim 2, wherein said fasteners are accommodated entirely within said frame thickness.

4. The electrical accessory according to any one of claims 1 to 3, wherein said fasteners (500) that are fitted to said accessory support (400) and to said base (100).

5. The electrical accessory according to claim 4, wherein said fasteners are rivets (500) passing through said accessory support and a portion of said base.

6. The electrical accessory according to any one of claims 1 to 5, wherein the insulating casing (110) of the base (100) includes a front edge (115) that defines a front opening of said base, and tongues (117) that extend from said front edge (115) towards the outside of said base, and wherein said accessory support (400) includes, at the rear, recesses (419) in said rear plane (410B), arranged to receive said tongues (117) in such a manner that the rear face (117B) of each tongue (117) extends flush with said rear plane (410B) of said accessory support.

7. The electrical accessory according to claim 6, wherein said fasteners (500) engage with said tongues (117) of the casing (110) of the base (100) to ensure that the base (100) is functionally secured to said appliance support (400).

8. The electrical accessory according to claim 6, wherein said appliance support (400) comprises an insulating part (410) that is moulded out of plastics material, in which said housings (419) are formed.

9. The electrical accessory according to claims 7 and 8, wherein said accessory support comprises a metal core (420) embedded at the rear of said insulating part (410) and locked between, on the one hand, an edge of each tongue (117) of the casing of the base that engages with each fastener (500), and, on the other hand, a front edge (115) of the casing (110) of the base (100), a face of the metal core (420) extending flush with said rear faces (117B) of said tongues (117), thereby forming a portion of said rear plane (410B) of said accessory support (400).

10. The electrical accessory according to claims 5 and 6, wherein each rivet (500) passes through said accessory support (400) and a tongue (117) of the casing (110) of said base, the head (502) of said rivet (500), situated on the rear face side of the corresponding tongue (117), extending set back from said rear face.

11. The electrical accessory according to any one of the preceding claims, wherein the accessory support and the base comprise complementary positioning elements (415, 415A, 114), distinct from said fasteners (500), which engage together at locations within said overall bulk volume of said base.

12. The electrical accessory according to claim 11, wherein said positioning elements comprise, on the one hand, on said accessory support, a wall (415) which extends perpendicularly to said rear plane inside said base, and which carries at least one catching tooth (415A), and, on the other hand, on said base, at least one window (114) formed in said casing (110), having an edge on which said catching tooth (415A) catches.

13. The electrical accessory according to any one of the preceding claims, constituting a modular accessory such as a power outlet, wherein the base encloses electronic elements such as a relay (131) connected to a track of a printed circuit (130), for the remote connection of said accessory to a portable control device.

14. The electrical accessory according to any one of the preceding claims, which forms a cable outlet device (30).

15. The electrical accessory according to any one of claims 1 to 13, which forms a power outlet and which comprises a USB micro-outlet (150) opening out on the front and connected to a track of a printed circuit carrying the electronic elements supplying power to said USB micro-outlet.
